# EUROPÄISCHE PATENTSCHRIFT

(11) **EP 0 660 662 B1**
(45) Veröffentlichungstag und Bekanntmachung des Hinweises auf die Patenterteilung: **27.12.1996**
(21) Anmeldenummer: 93919232.4
(22) Anmeldetag: 31.08.1993
(51) Int. Cl.: A01D 82/00, A01D 43/10

(54) **ERNTEMASCHINE ZUR GRÜNFUTTERAUFBEREITUNG**
HARVESTER FOR GREEN FODDER PREPARATION
MOISSONNEUSE DE PREPARATION DE FOURRAGE VERT

(30) Priorität: 01.09.1992 DE 4229060
(43) Veröffentlichungstag der Anmeldung: 05.07.1995
(73) Patentinhaber: SAME S.p.A., I-24047 Treviglio (Bergamo) (IT)
(72) Erfinder: VON ALLWÖRDEN, Wilhelm, D-89168 Oberstotzingen (DE)
(74) Vertreter: Nau, Walter, Dipl.-Ing.
(86) Internationale Anmeldenummer: EP9302355
(87) Internationale Veröffentlichungsnummer: WO9405148

(56) Entgegenhaltungen:
- EP-A- 0 205 206
- WO-A-90/12492
- DE-A- 1 407 158
- DE-A- 2 606 476
- DE-A- 2 817 793
- DE-A- 3 242 424
- DE-A- 3 939 618

## Beschreibung

Die Erfindung betrifft eine Erntemaschine zur Grünfutteraufbereitung, welche zumindest eine zur Beschleunigung des Trocknungsprozeßes von abgemähtem Halmgut vorgesehene aus zumindest zwei Elementen bestehende Preßvorrichtung aufweist, nach dem Oberbegriff des Patentanspruches 1. Solch eine Vorrichtung ist aus der DE-A-2817793 bekannt.

Aus der WO 90/12492 ist ein Verfahren zur Grünfutteraufbereitung bekannt, bei welchem abgemähtes Halmgut zur Beschleunigung des Trocknungsprozeßes von gegenläufig rotierenden Preßelementen durch einen Preßspalt gefördert wird und zur Herstellung einer eine im wesentlichen gleichmäßigen Dichte und Querschnitt aufweisenden Halmgutmatte das dem Preßspalt zugeführte Halmgutvolumen gemessen und in Abhängigkeit davon die Fördergeschwindigkeit der Preßelemente geregelt wird. Es hat sich als nachteilig herausgestellt, daß trotz dieser Regelung die Stärke der Halmgutmatte auf die Breite der Halmgutmatte verteilt nicht konstant dick ist. Die Verwendung von starten Preßelementen (bspw. Stahlrollen) hat zur Folge, daß die Halmgutmatte partiell nicht gepreßt wird. Dadurch kommt es nachteiliger Weise an diesen Stellen zu einer Auflösung der Halmgutmatte und damit zu einer Beeinträchtigung des Trocknungs- und des anSchließenden Aufnahmevorganges. Bei Verunreinigungen (z. B. durch Steine) oder einem zu hohen Halmgutvolumen kommt es zu Verzögerungen bzw. Ausfällen des Aufbereitungsprozesses.

Der Erfindung liegt die Aufgabe zugrunde, eine Erntemaschine zur Grünfutteraufbereitung derart auszubilden, daß unterschiedilche Mengen von zugeführtem Halmgut gleichmäßig gepreßt werden sowie ein optimaler Zusammenhalt der gepreßten Halmgutmatte gewährleistet ist. Weiterhin sollen Störungen im Aufbereitungsprozeß weitestgehend vermieden werden.

Diese Aufgabe wird durch die Merkmale des Kennzeichens gelöst. Es hat sich herausgestellt, daß aufgrund der Verwendung von elastisch verformbaren Rollen unterschiedliche Mengen von zugeführtem Halmgut gleichmäßig gepreßt werden und sich eine nahezu gleichmäßige Dicke der Halmgutmatte ergibt. Es ist denkbar, daß nur eine einzelne Rolle mehrere oder alle Rollen eines Teiles oder beider Teile der Preßvorrichtung elastisch verformbar ausgebildet sind. Ebenso kann ein Teil nur starre und der andere Teil nur mechanisch verformbare Rollen aufweisen. Weiterhin ist durch die Verformbarkeit, insbesondere durch eine partielle Verformung der Rolle gewährleistet, daß die Halmgutmatte über ihre Breite gleichmäßig gepreßt wird. Dies ist besonders auch dann der Fall, wenn das zugeführte Halmgutvolumen nicht gleichmäßig ist. Weiterhin hat die elastische Verformbarkeit der Rollen den Vorteil, daß Verunreinigungen (z. B. durch Steine) durch den Preßspalt gelangen können. Dadurch ist eine Verzögerung oder ein Ausfall des Aufbereitungsprozeßes wirksam vermieden.

In Weiterbildung der Erfindung weist die Rolle einen starren Kern mit einem elastisch verformbaren Überzug auf. Bei dem elastisch verformbaren Überzug handelt es sich beispielsweise um einen Gummi- oder Kautschukbelag, der auf den Außenflächen der Rolle aufgebracht ist. Diese Ausbildung hat neben den bisher genannten Vorteilen den Vorteil, daß eine Erntemaschine mit starren Rollen (z. B. Stahlrollen) als Preßvorrichtung leicht nachrüstbar ist.

In weiteren Ausgestaltungen der Erfindung sind die Rollen als Luftdruck- oder Vollgummireifen ausgebildet. Die Ausbildung als Luftdruckreifen (Felge mit Reifen) hat den Vorteil, daß durch Variation des Luftdruckes die Breite des Preßspaltes und der Preßdruck einstellbar ist. Dabei ist es denkbar, den Luftdruck manuell oder automatisch (regelbar) einzustellen. Der gleiche Effekt kann bei der Ausbildung der Rolle als Vollgummireifen erreicht werden, wobei zur unterschiedlichen Druckeinstellung unterschiedliche Gummimischungen verwendbar sind. Bei einer Anordnung von mehreren Rollen hintereinander ist es denkbar, daß die am Anfang eines Teiles der Preßvorrichtung angeordnete Rolle eine weiche Gummimischung aufweist und die im folgenden angeordneten Rollen härtere Mischungen aufweisen. Auch eine Kombination der genannten Ausbildungen (starrer Kern mit Überzug, Luftdruckreifen, Vollgummireifen) miteinander sowie mit starren Rollen ist möglich. Darüber hinaus ist es möglich, den verformbaren Überzug der Rollen mit starrem Kern beziehungsweise die Oberflächen der als Luftdruck- oder Vollgummireifen profiliert zu gestalten. Denkbare Profile sind beispielsweise Rauten, Noppen, Rillen (Quer- bzw. Längsrillen) sowie Kombinationen der geannnten Profile untereinander und mit weiteren geometrischen Profilen. In vorteilhafter Weise ist aufgrund der Profilierung eine Abfuhr der Feuchtigkeit, die sich beim Preßvorgang ergibt, möglich. Zu diesem Zweck sind die sich aus der Profilierung ergebenden Zwischenräume (z. B. Nuten) von der Mitte eines Reifens nach außen gerichtet (vergleichbar beispielsweise dem Profil eines Autoreifens).

In Weiterbildung der Erfindung besteht zumindest ein Teil der Preßvorrichtung aus einem um zumindest zwei Rollen (insbesondere eine Antriebs- und eine Umlenkrolle) geführtem Band. In einer besonderen Ausgestaltung weisen beide Teile der Preßvorrichtung ein um zumindest zwei Rollen geführtes Band auf. Diese an sich bekannte Preß- und Transportvorrichtung hat ebenfalls bei Verwendung zumindest einer Rolle, die elastisch verformbar ist, den Vorteil, daß der Preßvorgang eine gleichmäßige Dicke der Halmgutmatte liefert und ein optimaler Zusammenhalt der gepreßten Halmgutmatte gewährleistet ist.

In einer weiteren Ausgestaltung ist das Band der Preßvorrichtung perforiert, wodurch die beim Preßvorgang entstehende Feuchtigkeit bzw. Flüssigkeit zuverlässig abführbar ist und der Trocknungsprozeß beschleunigt wird.

Die in den weiteren Unteransprüchen angegebenen Ausbildungen betreffen vorteilhafte Weiterbildungen der Erfindung, die im folgenden näher beschrieben und in den Zeichnungen gezeigt sind.

Die Figuren zeigen:
- Figur 1:: eine Preßvorrichtung mit zumindest zwei Rollen,
- Figur 2:: eine Preßvorrichtung mit einer aus Teilrollen bestehenden Rolle,
- Figur 3:: eine Preßvorrichtung mit mehreren aus Teilrollen bestehenden Rollen,
- Figur 4:: eine Preßvorrichtung mit einem um Teilrollen geführtem Band,
- Figur 5:: eine Preßvorrichtung mit einem um Rollen, die einen starren Kern aufweisen, geführtem Band,
- Figur 6:: eine Preßvorrichtung mit versetzt angeordneten Luftdruckreifen,
- Figur 7:: Detailansicht einer Anordnung mit Luftdruckreifen.

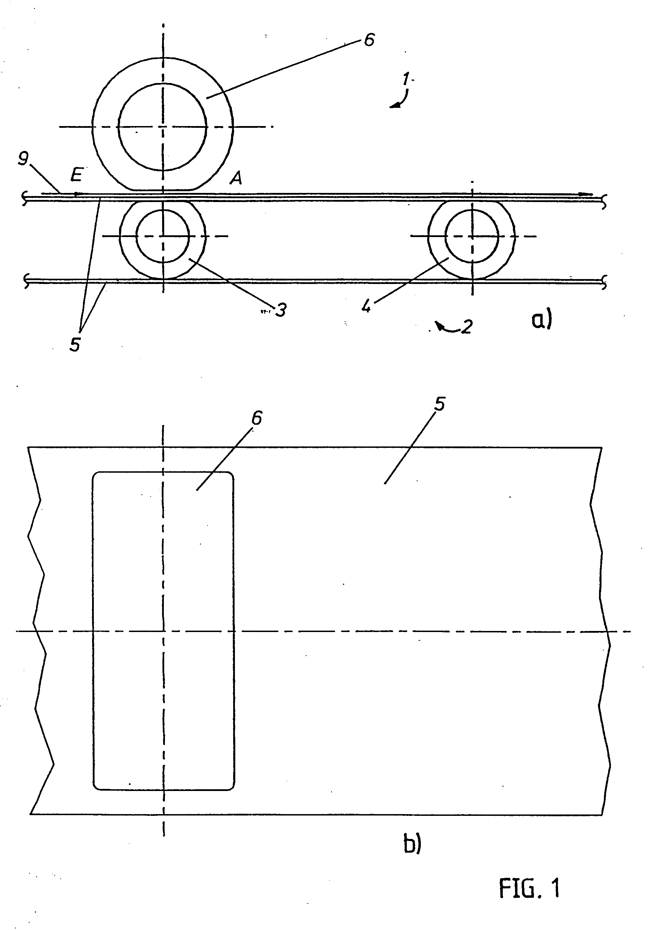

In der folgenden Figurenbeschreibung zu Figur 1 bis 5 ist jeweils eine Seitenansicht einer Preßvorrichtung mit a und eine Draufsicht der Preßvorrichtung mit b bezeichnet. In allen Figuren ist ein Eingangsbereich (in dem das Halmgut zugeführt wird) mit E und entsprechend ein Ausgangsbereich mit A bezeichnet. Diesen Bereichen sind entsprechend ausgebildete Transport- und Verarbeitungsvorrichtungen vor- bzw. nachgeschaltet.

Figur 1 zeigt eine Preßvorrichtung mit zumindest zwei Rollen. Die Preßvorrichtung besteht aus einem ersten Teil 1 und einem zweiten Teil 2. Der Teil 2 besteht im wesentlichen aus einer Rolle, die beispielsweise als Antriebsrolle 3 ausgebildet ist. Darüber hinaus weist dieser Teil 2 eine Rolle 4 auf, wobei ein Band 5 (Förderband) über die Antriebsrolle 3 und die Rolle 4 geführt ist. Bei einer oder beiden Rollen 3 bzw. 4 kann es sich um Rollen (Umlenkrollen) handeln, um die das Band 5 herumgeführt ist. Der Teil 1 weist eine Druckrolle 6 auf, wobei die Druckrolle 6 und die Antriebsrolle 3 einen Preßspalt bilden, durch die Halmgut 9 geführt wird. In erfindungsgemäßer Weise ist zumindest eine der Rollen 3, 4 oder 6 elastisch verformbar ausgebildet. In Figur 1b ist die Druckrolle 6 gezeigt, die sich über annähernd die gesamte Breite des Bandes 5 erstreckt. Seitlich des Bandes 5 ist eine Leiteinrichtung (z. B. Leitblech) denkbar, wodurch die Breite der Halmgutmatte eingrenzbar ist. Die Druckrolle 6 wird über eine direkte oder indirekte Verbindung mit der Antriebsrolle 3 von dieser angetrieben oder läuft ohne Antrieb mit.

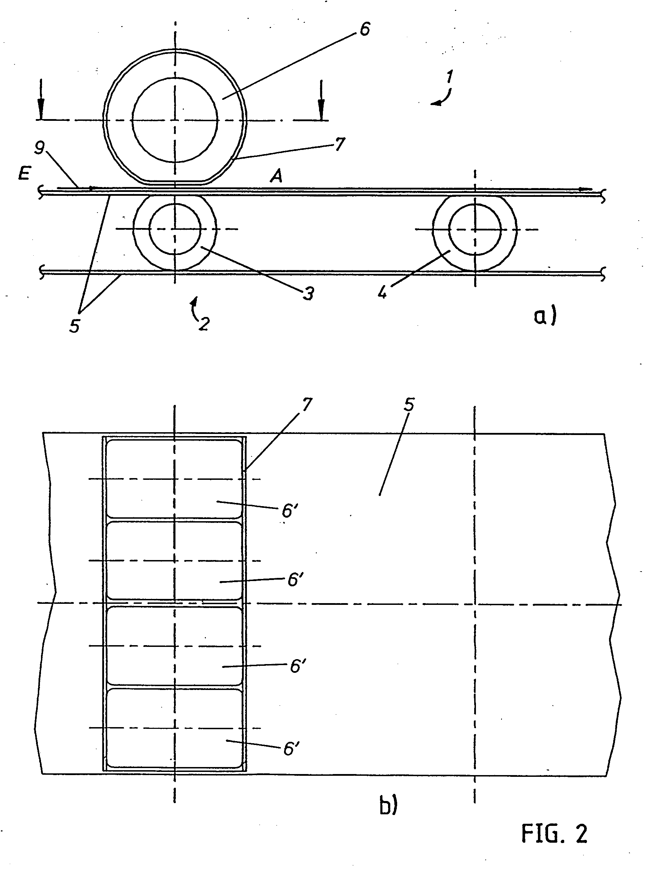

Figur 2 zeigt eine Preßvorrichtung mit einer aus Teilrollen bestehenden Rolle. Die schon in Figur 1 gezeigte und beschriebene Druckrolle 6 besteht aus mehreren Teilrollen 6', die auf einer einzigen Achse angeordnet sind. Wie in Figur 2b gezeigt, handelt es sich bei den Teilrollen 6' um einzelne starre Rollen, die zussammenfassend mit einem Überzug 7 (z. B. Gummi oder Kautschuk) versehen sind. Darüber hinaus ist es denkbar, die Teilrollen 6' einzeln mit dem Überzug 7 zu versehen. Weiterhin können die Teilrollen 6' als Luftdruck- beziehungsweise als Vollgummireifen ausgebildet sein. Weiterhin ist es denkbar, zumindest die Achse der Druckrolle 6 (bzw. der Teilrollen 6') bewegbar zu lagern und mit einer Kraft zu beaufschlagen. Dies ist auch für weitere oder alle Achsen der Rollen denkbar. In Figur 2a ist dies durch zwei Pfeile angedeutet. Hier ist es denkbar, eine einzige Achse der Druckrolle 6 oder auch die einzelnen Achsen der Teilrollen 6' bewegbar zu lagern. Durch eine Lageänderung einer Rolle (insbesondere der Druckrolle 6) zu einer weiteren Rolle (insbesondere zu der Antriebsrolle 3) ist eine Veränderung bzw. Einstellung des Preßspaltes für das Halmgut 9 gegeben. Aufgrund der Kraftbeaufschlagung bzw. einer Kraftregulung (z. B. hydraulisch) ist die Preßkraft individuell einstellbar, so daß eine konstante und gleichmäßige Dicke der Halmgutmatte realisierbar ist. Eine Kraftbeaufschlagung mittels Federkraft ist ebenfalls denkbar. Ebenso kann der Preßspalt manuell oder antreibbar (z. B. motorisch angetriebene Spindei) auf eine konstante Breite eingestellt werden. Die Breite kann variabel (kontinuierlich) oder schrittweise einstellbar sein.

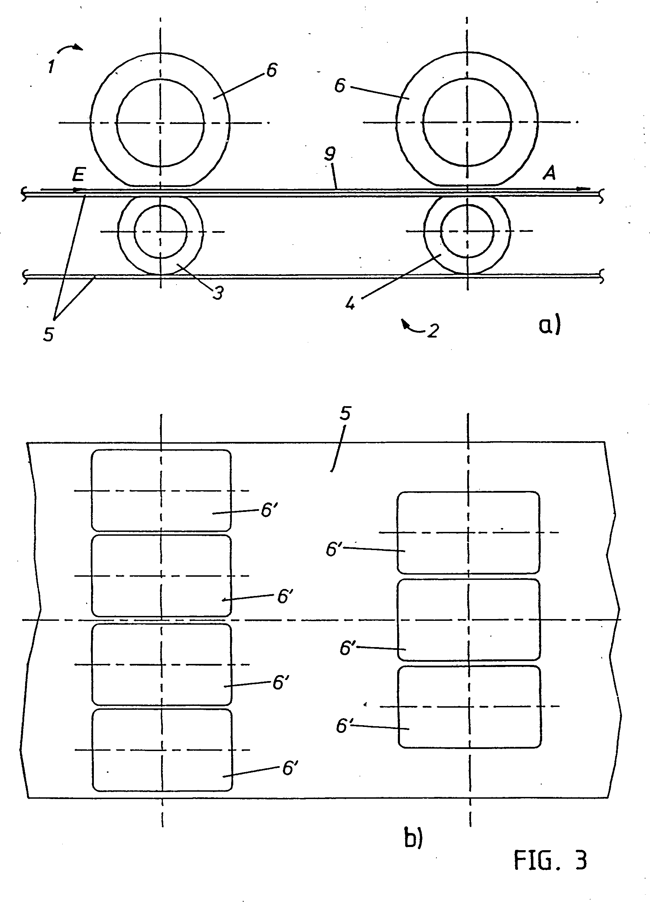

Figur 3 zeigt eine Preßvorrichtung mit mehreren aus Teilrollen bestehenden Rollen. Neben den in Figur 2 gezeigten Komponenten und mit den gleichen Bezugsziffern versehenen Komponenten weist der Teil 1 eine weitere Druckrolle 6 auf, wobei den hintereinander angeordneten Druckrollen 6 des Teiles 1 die Antriebsrolle 3 bzw. die Umlenkrolle 4 der Preßvorrichtung zugeordnet ist. Die Druckrollen 6 bestehen wiederrum aus mehreren Teilrollen 6', die einzeln elastisch verformbar sind. Ebenso ist es denkbar, daß die Antriebsrolle 3 bzw. die Umlenkrolle 4 des unteren Teiles 2 aus Teilrollen (analog zu der Druckrolle 6) bestehen. Zwischen den beiden Druckrollen 6 sowie zwischen der Antriebsrolle 3 bzw. der Umlenkrolle 4 können weitere Rollen angeordnet werden. Die in dieser Figur gezeigte Druckrolle 6 und Antriebsrolle 3 (bzw. Rolle 4) besteht aus Teilrollen 6', deren Außenflächen im Preßbereich (Draufsicht in Fig. 3b) einander zugeordnet sind, d. h. einer Teilrolle 6' ist eine Teilrolle (nicht gezeigt) der Antriebsrolle 3 (bzw. Rolle 4) zugeordnet. Bei unterschiedlicher Breite der Teilrollen können sich die Außenflächen überschneiden. Auch ist eine unterschiedliche Anzahl von Teilrollen auf den jeweiligen Rollen denkbar. Bezugnehmend auf die in Figur 3b gezeigte Anordnung der Teilrollen 6' ist die Verwendung einer unterschiedlichen Anzahl von Teilrollen auf den Rollen besonders vorteilhaft. In Figur 3b sind auf der linken Seite 4 Teilrollen 6' und auf der rechten Seite 3 Teilrollen 6' angeordnet. Diese versetzte Anordnung der einzelnen Teilrollen hat den Vorteil, daß das zugeführte Halmgut von den links angeordneten Teilrollen gepreßt und im Zwischenbereich dieser Teilrollen ein Steg verbleibt. Dieser Steg wird dann beim Weitertransport durch das Band 5 von den in Figur 3b rechts angeordneten Teilrollen 6' erfaßt und gepreßt. Aufgrund dieser Verfahrensweise sind die Druckkräfte der Teilrollen größer als bei einer einstückig ausgebildeten Rolle, so daß dadurch die schon geschilderten Vorteile ebenfalls einfach erreichbar sind. In einer besonderen Ausgestaltung der Erfindung sind die Teilrollen derart angeordnet, daß in Bewegungsrichtung des Bandes 5 einem Spalt zwischen zwei Teilrollen eine weitere Teilrolle derart folgt, daß der Spalt und die Längsachse der folgenden Teilrolle auf einer Linie liegen (oder umgekehrt). In einer weiteren Ausgestaltung ist die Teilrolle, die dem Spalt folgt (oder umgekehrt), mindestens so breit wie der Spalt selber.

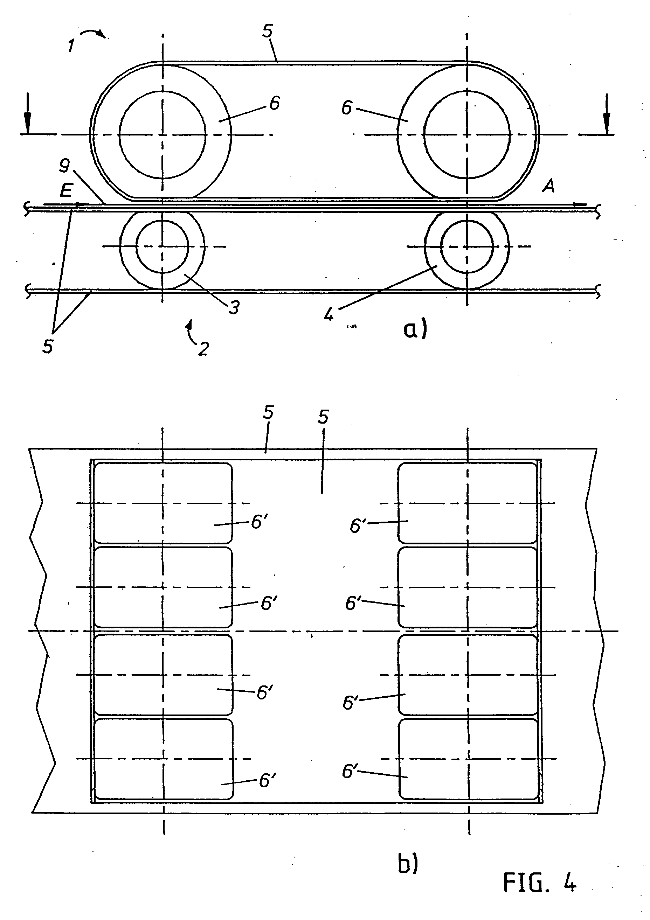

Figur 4 zeigt eine Preßvorrichtung mit einem um Teilrollen geführtem Band. Der in dieser Figur gezeigte Teil 2 weist ebenfalls das Band 5 auf, daß um die Druckrollen 6 geführt ist, wobei die Druckrollen 6 wiederum aus Teilrollen 6' bestehen. Auch hier ist es denkbar, daß die Teilrollen 6' in ihrer Gesamtheit oder einzeln mit dem Überzug 7 versehen sind Ebenso ist es denkbar, eine Druckrolle 6 und die weitere Druckrolle 6 mechanisch verformbar auszuführen. Ebenfalls ist es denkbar, daß die Druckrollen 6 einen gleichmäßigen oder einen unterschiedlichen Grad der Verformbarkeit aufweisen. Es sei darauf hingewiesen, daß die Bänder 5 der beiden Teile 1 und 2 trotz gleicher Bezugsziffer unterschiedlich geartet sein können (insbesondere hinsichtlich des Materials, der Abmessungen sowie der Oberflächen).

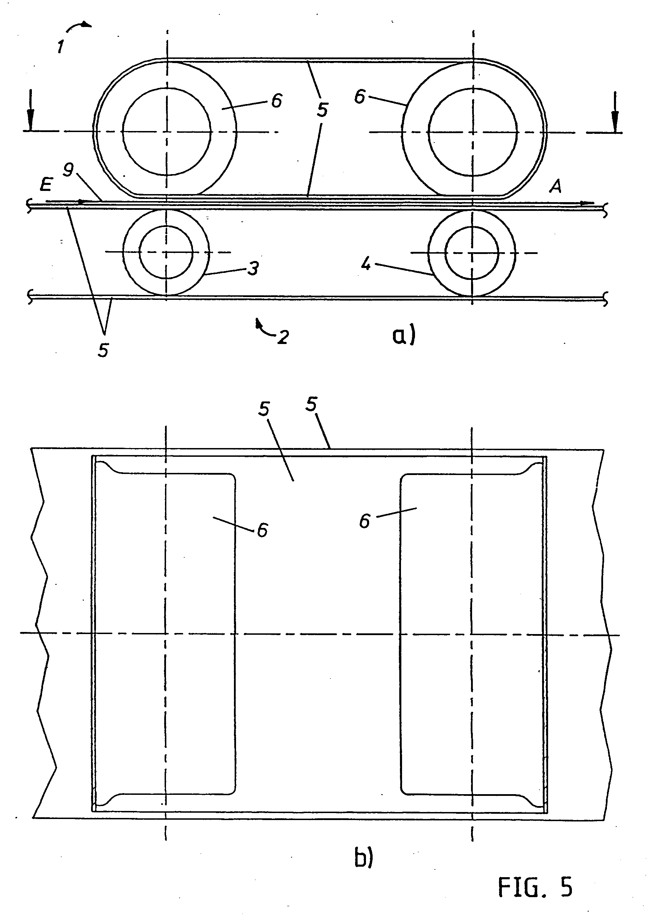

Figur 5 zeigt eine Preßvorrichtung mit einem um Rollen, die einen starren Kern aufweisen, geführtem Band. Wie schon in Figur 4 gezeigt und beschrieben sind die Druckrollen 6 des zweiten Teiles 2 als Rollen, die einen starren Kern aufweisen, ausgebildet, um die das Band 5 geführt ist Bei der in der Figur 5 gezeigten Ausgestaltung der Erfindung sind die Antriebsrolle 3 und die Umlenkrolle 4 starr oder ebenfalls elastisch verformbar.

In der vorangegangenen Beschreibung zu den Figuren ist zumindest einer Rolle des oberen Teiles 1 eine Rolle des unteren Teiles 2 zugeordnet, wobei die Achsen der Rollen der beiden Teile 1 und 2 in Ebenen parallel zu dem Band 5 höhenversetzt angeordnet sind. Weiterhin sind die Achsen in einer Ebene senkrecht zu dem Band 5 liegenden Ebene angeordnet. Hier ist es denkbar, die Achsen der Rollen in einer von der Senkrechten zu dem Band 5 abweichenden Ebene anzuordnen. Insbesondere können einer Rolle eines Teiles zwei Rollen des anderen Teiles zugeordnet werden (bei einer geraden Führung des Bandes 5).

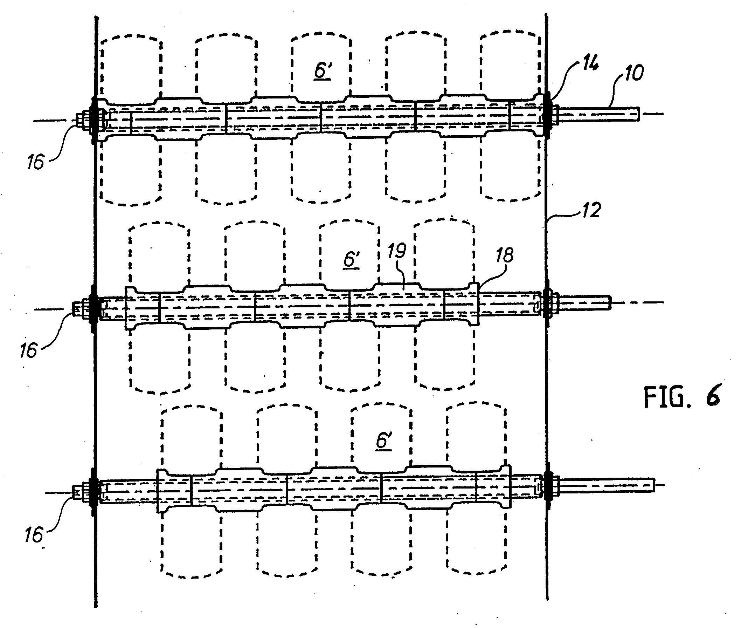

Figur 6 zeigt eine Preßvorrichtung mit versetzt angeordneten Luftdruckreifen. Die als Luftdruckreifen ausgebildeten Teilrollen 6' sind auf Distanz auf einer Achse 10 angeordnet. Mehrere dieser Anordnungen (in Figur 6 drei Stück) sind in einem Rahmen 12 gelagert, wobei eine Lagerung 14 in dem Rahmen 12 zur Aufnahme der Achsen 10 vorgesehen ist, die die Leichtgängigkeit der Achsen 10 gewährleistet und die beim Preßen entstehenden Kräfte aufnimmt. Die Luftversorgung der Luftreifen erfolgt über eine an jeder Achse 10 vorhandene Luftzufuhr 16, wobei die Teilrollen 6' (Luftdruckreifen) auf Felgen 18 bzw. 19 auf den Achsen 10 angeordnet sind. Eine derartige Anordnung im Detail und die Wirkungsweise ist in der folgenden Figur beschrieben.

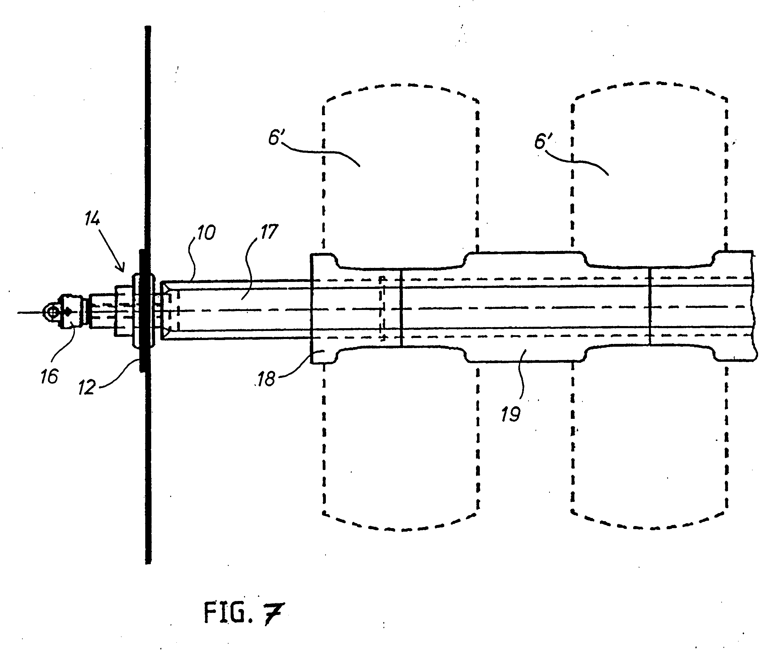

Figur 7 zeigt eine Detailansicht einer Anordnung mit Luftdruckreifen. Die Teilrollen 6' (Luftdruckreifen) sind auf Felgen 18 und 19 auf der Achse 10 angeordnet. Die Felgen 18 und 19 sind derart ausgestaltet, daß bei der Montage zunächst die Felge 18 (Endstück) in einer vorgebbaren Stellung auf der Achse positioniert wird. Anschließend erfolgt die Montage einer Teilrolle und es folgt die Felge 19. Die Felge 18 ist derart ausgestaltet, daß sie eine einzige Hälfte einer Teilrolle 6' aufnimmt, während die Felge 19 zu ihren beiden Endseiten jeweils eine Hälfte einer Teilrolle 6' aufnimmt. An den Außenbereichen der Teilrollen 6', die in Verbindung mit den Felgen 18 bzw. 19 stehen, schließen diese luftdicht ab. An der Stoßkante zwischen der Felge 18 und 19 bzw. an den Stoßkanten zweier Felgen 19 sind diese derart ausgebildet, daß über eine in der Achse 10 eingebrachte Bohrung 17 und eine entsprechende Ausbildung der Stoßkanten (z. B. Bohrung oder Schlitz) eine Luftversorgung der Luftdruckreifen gegeben ist Darüber hinaus ist es denkbar, die Felgen 18 bzw. 19 mit einem Spannstift auf der Achse 10 zu befestigen. Dieser Spannstift, der zumindest einmal durch eine Felge und die Achse 10 weitestgehend senkrecht durchgeführt ist, übernimmt die Fixierung der Felge auf der Achse sowie bei hohler Ausführung des Spannstiftes die Luftversorgung. Bei zweimaliger Durchführung ist es denkbar, den Spannstift (hohl ausgeführt) im Bereich des Inneren der Achse mit einer Bohrung zu versehen zwecks Luftversorgung. Die Luftversorgung erfolgt in vorteilhafter Weise über die Luftzufuhr 16 (beispielsweise Ventil) in gleichmäßiger Weise für alle auf der Achse 10 angebrachten Teilrollen 6'. Unter Verwendung einer alternativen Konstruktion ist es denkbar, die auf einer Achse angeordneten Teilrollen mit unterschiedlichem Luftdruck zu versorgen. Weiterhin ist es denkbar, daß mehrere in dem Rahmen 12 gelagerte Achsen (wie dies in Figur 6 gezeigt ist) gleichmäßig mit einer zentralen Luftversorgung zu versehen oder die einzelnen in dem Rahmen 12 angeordneten Achsen getrennt mit unterschiedlichem Druck zu versorgen. In vorteihafter Weise erfolgt eine permanente Messung des Luftdruckes, so daß beim Verlassen eines zulässigen Wertebereiches für den Luftdruck geeignete Maßnahmen (z. B. Ausgabe eines Störsignals oder Verändern des Luftdruckes) ergreifbar sind. Die Erzeugung des Luftdruckes übernimmt ein eigenständiger Kompressor. Alternativ dazu ist es denkbar, einen Kompressor zu verwenden, der von einem Antriebsmotor der Erntemaschine angetrieben wird.

Es ist darauf hinzuweisen, daß die in den Figuren gezeigten und mit den gleichen Bezugsziffern versehenen Rollen unterschiedlich ausgebildet sein können hinsichtlich des Materials, der Abmessungen, der Oberfläche (z. B. rauh/glatt), der Anordnung, der Art (elastisch verformbare Oberfläche/Luftdruckreifen/Vollgummireifen in Kombination mit waren Rollen) oder weiterer Merkmale. Innerhalb der gesamten Preßvorrichtung (bzw. innerhalb der einzelnen Teile) ist die Anzahl unterschiedlicher bzw. gleichartiger Rollen variierbar. Allgemein ist zu Erzielung der elastischen Verformung ein durch ein fließfähiges Medium von innen mit Überdruck beaufschlagbarer Hohlkörper denkbar, wobei dieser eine flexible Hülle aufweist. Diese weist beispielsweise zumindest einen aus einem Schaumstoff mit geschlossenen Hohlräumen bestehenden inneren Teil auf, dessen Volumen durch den Druck des fließfähigen Mediums veränderbar ist, wobei ein äußerer Teil weitgehend unelastisch ist.

## Patentansprüche

1. Vorrichtung zur Grünfutteraufbereitung, welche zumindest eine zur Beschleunigung des Trocknungsprozesses von abgemähtem Halmgut vorgesehene aus zumindest zwei Rollen (6, 6') bestehende Preßvorrichtung (1, 2) aufweist, wobei die Rollen (6, 6') einen Preßspalt bilden, durch den das Halmgut geführt wie und zumindest eine Rolle (6, 6') der Preßvorrichtung (1, 2) elastisch verformbar ausgebildet ist,
*dadurch gekennzeichnet*, daß ein Teil der Preßvorrichtung (1, 2) aus einem um zumindest zwei Rollen (6, 6') geführtem Band (5) besteht, wobei eine Rolle (6, 6') als Antriebsrolle und eine Rolle (6, 6') als Umlenkrolle ausgebildet ist und daß einer Rolle (6, 6') eines Teiles zumindest eine Rolle des anderen Teiles der Preßvorrichtung (1, 2) derart zugeordnet ist, daß die Achsen der Rollen (6, 6') jeweils in verschiedenen Ebenen parallel zu dem Band (5) höhenversetzt sind und die Achsen der einander zugeordneten Rollen (6, 6') gemeinsam auf einer Ebene angeordnet sind, die senkrecht zu dem Band (5) ausgerichtet ist.

2. Vorrichtung nach Anspruch 1,
*dadurch gekennzeichnet*, daß zumindest eine Rolle (6) der Preßvorrichtung (1, 2) aus mehreren auf einer Achse angeordneten Teilrollen besteht.

3. Vorrichtung nach Anspruch 1 oder 2,
*dadurch gekennzeichnet*, daß die Rolle (6) einen starten Kern mit einem elastisch verformbaren Überzug aufweist.

4. Vorrichtung nach Anspruch 1 oder 2,
*dadurch gekennzeichnet*, daß die Rolle (6) als Luftdruckreifen ausgebildet ist.

5. Vorrichtung nach Anspruch 1 oder 2,
*dadurch gekennzeichnet*, daß die Rolle (6) als Vollgummireifen ausgebildet ist.

6. Vorrichtung nach einem der vorhergehenden Ansprüche,
*dadurch gekennzeichnet*, daß sich die Rollen (6) der Preßvorrichtung im wesentlichen über die gesamte Breite des Bandes der Preßvorrichtung erstrecken.

7. Vorrichtung nach einem der vorhergehenden Ansprüche,
*dadurch gekennzeichnet*, daß zumindest ein Teil (1) der Preßvorrichtung Rollen (6), die aus mehreren auf einer Achse angeordneten Teilrollen (6') bestehen, aufweist, wobei die Außenflächen der einzelnen Teilrollen (6') im Preßbereich der Rollen einander zugeordnet sind.

8. Vorrichtung nach einem der vorhergehenden Ansprüche,
*dadurch gekennzeichnet*, daß zumindest einige Teilrollen (6') gemeinsam mit einem elastisch verformbaren Überzug (7) versehen sind.

9. Vorrichtung nach einem der vorhergehenden Ansprüche,
*dadurch gekennzeichnet*, daß die Teilrollen (6') einer Rolle (6) eines Teiles der Preßvorrichtung in Achsrichtung versetzt angeordnet sind zu den Teilrollen (6') einer Rolle (6) desselben Teiles und/oder des anderen Teiles der Preßvorrichtung.

10. Vorrichtung nach einem der vorhergehenden Ansprüche,
*dadurch gekennzeichnet*, daß die Achsen der Rollen beziehungsweise Teilrollen zumindest eines Teiles der Preßvorrichtung bewegbar gelagert und kraftbeaufschlagt sind.

11. Vorrichtung nach einem der vorhergehenden Ansprüche,
*dadurch gekennzeichnet*, daß die Kraftbeaufschlagung einstellbar und/oder regelbar ist.

12. Vorrichtung nach einem der vorhergehenden Ansprüche,
*dadurch gekennzeichnet*, daß das Band des einen Teiles (1) und/oder des zweiten Teiles (2) der Preßvorrichtung perforiert ist.

13. Vorrichtung nach einem der vorhergehenden Ansprüche,
*dadurch gekennzeichnet*, daß die Oberfläche der Rollen (6) beziehungsweise der Teilrollen (6') profiliert ist.

14. Vorrichtung nach einem der vohrergehenden Ansprüche,
*dadurch gekennzeichnet*, daß die Kraftbeaufschlagung der als Luftdruckreifen ausgebildeten Teilrollen (6') durch Verändern des Luftdruckes erfolgt, wobei die Zufuhr von Druckluft durch die Achse und Felgen, auf welchen die Luftdruckreifen montiert sind, erfolgt.

15. Vorrichtung nach einem der vorhergehenden Ansprüche,
*dadurch gekennzeichnet*, daß die Zufuhr von Druckluft zentral zu allen Luftdruckreifen erfolgt.

## Claims

1. A device for processing green fodder and comprising a press (1, 2) comprising at least two rollers (6, 6') for accelerating the process of drying mown stalk material, the rollers (6, 6') forming a nip through which the stalk material is conveyed, and at least one roller (6, 6') of the press (1, 2) being resiliently deformable,
*characterised in that* a part of the press (1, 2) comprises a belt (5) guided around at least two rollers (6, 6'), one roller (6, 6') being constructed as a driving roller and one roller (6, 6') being constructed as a guide roller, and one roller (6, 6') of one part of the press (1, 2) is associated with at least one roller of the other part so that the axes of the rollers (6, 6') are vertically offset in different planes parallel to the belt (5), and the axes of the associated rollers (6, 6') are disposed in common in a plane at right angles to the belt (5).

2. A device according to claim 1,
*characterised in that* at least one roller (6) of the press (1, 2) comprises a number of component rollers mounted on a shaft.

3. A device according to claim 1 or claim 2,
*characterised in that* the roller (6) has a rigid core and an elastically deformable covering.

4. A device according to claim 1 or claim 2,
*characterised in that* the roller (6) is constructed as a pneumatic tyre.

5. A device according to claim 1 or claim 2,
*characterised in that* the roller (6) is a solid rubber tyre.

6. A device according to any of the preceding claims,
*characterised in that* the rollers (6) of the press extend substantially over the entire width of the belt in the press.

7. A device according to any of the preceding claims,
*characterised in that* at least one part (1) of the press comprises rollers (6) made up of a number of component rollers (6') mounted on a shaft, the outer surfaces of the individual component rollers (6') being associated with one another in the pressure range of the rollers.

8. A device according to any of the preceding claims,
*characterised in that* at least some components (6) are jointly provided with an elastically deformable covering (7).

9. A device according to any of the preceding claims,
*characterised in that* the component rollers (6') making up a roller (6) in a part of the press are offset in the axial direction relative to the component rollers (6') of a roller (6) in the same part and/or the other part of the press.

10. A device according to any of the preceding claims,
*characterised in that* the shafts of the rollers or component rollers of at least one part of the press are movably mounted and acted upon by a force.

11. A device according to any of the preceding claims,
*characterised in that* the actuating force is adjustable and/or controllable.

12. A device according to any of the preceding claims,
*characterised in that* the belt on one part (1) and/or the other part (2) of the press is perforated.

13. A device according to any of the preceding claims,
*characterised in that* the surface of the rollers (6) or component rollers (6') is profiled.

14. A device according to any of the preceding claims,
*characterised in that* the force acting on the component rollers (6') constructed as pneumatic tyres is applied by varying the air pressure, compressed air being supplied through the shaft and rims on which the pneumatic tyres are mounted.

15. A device according to any of the preceding claims,
*characterised in that* compressed air is supplied centrally to all pneumatic tyres.

## Revendications

1. Dispositif pour la préparation de fourrage vert, comprenant un dispositif de compression pour accélérer le processus de séchage des produits en tiges, fauchés, ce dispositif de compression (1, 2) se composant d'au moins deux rouleaux (6, 6'), formant un intervalle de compression à travers lequel on fait passer les produits en tiges, au moins l'un des rouleaux (6, 6') du dispositif de compression (1, 2) étant déformable élastiquement,
caractérisé en ce que
une partie du dispositif de compression (1, 2) est en une bande (5) passant autour d'au moins deux rouleaux (6, 6'), un rouleau (6, 6') étant un rouleau d'entraînement et un rouleau (6, 6') un rouleau de renvoi, un rouleau (6, 6') d'une partie étant associé à au moins un rouleau de l'autre partie du dispositif de compression (1, 2) pour que les axes des rouleaux (6, 6') soient décalés en hauteur dans deux plans différents, parallèles à la bande (5) et que les axes des rouleaux (6, 6') associés se situent dans un même plan perpendiculaire à la bande (5).

2. Dispositif selon la revendication 1,
caractérisé en ce que
au moins un rouleau (6) du dispositif de compression (1, 2) se compose de plusieurs rouleaux élémentaires montés sur un axe.

3. Dispositif selon la revendication 1 ou 2,
caractérisé en ce que
le rouleau (6) comprend un noyau rigide muni d'un revêtement et déformable élastiquement.

4. Dispositif selon la revendication 1 ou 2,
caractérisé en ce que
le rouleau (6) est un pneumatique.

5. Dispositif selon la revendication 1 ou 2,
caractérisé en ce que
le rouleau (6) est un bandage en caoutchouc plein.

6. Dispositif selon l'une des revendications précédentes,
caractérisé en ce que
les rouleaux (6) du dispositif de compression s'étendent principalement sur toute la largeur de la bande du dispositif de compression.

7. Dispositif selon l'une quelconque des revendications précédentes,
caractérisé en ce que
au moins une partie (1) du dispositif de compression comporte des rouleaux formés de plusieurs rouleaux élémentaires (6') montés sur un axe, la surface extérieure des différents rouleaux élémentaires (6') étant associée dans la zone de compression des rouleaux.

8. Dispositif selon l'une des revendications précédentes,
caractérisé en ce que
au moins certains rouleaux élémentaires (6') sont munis en commun d'un revêtement élastiquement déformable (7).

9. Dispositif selon l'une des revendications précédentes,
caractérisé en ce que
les rouleaux élémentaires (6') formant un rouleau (6) d'une partie du dispositif de compression sont décalés dans la direction axiale par rapport aux rouleaux élémentaires (6') d'un rouleau (6) de la même partie et/ou de l'autre partie du dispositif de compression.

10. Dispositif selon l'une des revendications précédentes,
caractérisé en ce que
les axes des rouleaux ou des rouleaux élémentaires d'au moins une partie du dispositif de compression sont montés mobiles et peuvent recevoir des efforts.

11. Dispositif selon l'une des revendications précédentes,
caractérisé en ce que
l'application d'une force est réglable et/ou peut se réguler.

12. Dispositif selon l'une des revendications précédentes,
caractérisé en ce que
la bande d'une partie (1) et/ou de la seconde partie (2) du dispositif de compression est perforée.

13. Dispositif selon l'une des revendications précédentes,
caractérisé en ce que
la surface des rouleaux (6) ou des éléments de rouleaux (6') est profilée.

14. Dispositif selon l'une des revendications précédentes,
caractérisé en ce que
l'application de la force des rouleaux élémentaires (6') constitués par des pneumatiques se fait par changement de la pression de l'air et l'alimentation en air comprimé se fait à travers l'axe et les jantes portant les pneumatiques.

15. Dispositif selon l'une des revendications précédentes,
caractérisé en ce que
l'alimentation en air comprimé se fait de manière centralisée pour tous les pneumatiques.
